Europäisches Patentamt

European Patent Office

Office européen des brevets

(19)

(11) Numéro de publication: **0 468 039 B1**

(12) **FASCICULE DE BREVET EUROPEEN**

(45) Date de publication de fascicule du brevet: **12.07.95**   (51) Int. Cl.6: **B29C 59/14**

(21) Numéro de dépôt: **91904834.8**

(22) Date de dépôt: **14.02.91**

(86) Numéro de dépôt internationale :
**PCT/FR91/00116**

(87) Numéro de publication internationale :
**WO 91/12126 (22.08.91 91/19)**

(54) **PROCEDE D'AMELIORATION DE L'APTITUDE A LA MISE EN PEINTURE D'OBJETS FACONNES A PARTIR D'ALLIAGES POLYAMIDE/POLYOLEFINE.**

(30) Priorité: **15.02.90 FR 9001815**

(43) Date de publication de la demande:
**29.01.92 Bulletin 92/05**

(45) Mention de la délivrance du brevet:
**12.07.95 Bulletin 95/28**

(84) Etats contractants désignés:
**AT BE CH DE DK ES FR GB GR IT LI LU NL SE**

(56) Documents cités:
**EP-A- 0 120 307**
**EP-A- 0 297 795**
**FR-A- 2 629 090**
**GB-A- 2 172 819**

**Patent Abstracts of Japan, vol. 6, no. 158 (C-120)(1036), 19 août 1982; & JP,A, 5778426 (SHINETSU KAGAKU KOGYO K.K.) 17 mai 1982**

(73) Titulaire: **ELF AOUITAINE**
**Tour Elf,**
**2, Place de la Coupole,**
**La Défense 6**
**F-92400 Courbevoie (FR)**

(72) Inventeur: **VERZARO, Francis**
**2, lotissement Mallecouronne**
**F-64121 Serres-Castet (FR)**

(74) Mandataire: **Boillot, Marc**
**ELF AOUITAINE**
**Division Propriété Industrielle**
**Tour Elf**
**F-92078 Paris la Défense Cédex 45 (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

**Description**

L'invention concerne un procédé d'amélioration de l'aptitude à la mise en peinture d'objets façonnés à partir d'alliages polyamide/polyoléfine.

Les alliages polyamide/polyoléfine, notamment alliages polyamide/polypropylène, sont des matériaux polymériques que l'on obtient généralement en mélangeant une composante polyamide, consistant en un ou plusieurs polyamides, avec une composante polyoléfine, consistant en une ou plusieurs polyoléfines comme, par exemple, le polypropylène, et un agent susceptible de compatibiliser les deux composantes polymères ou encore en mélangeant une composante polyamide, consistant en un ou plusieurs polyamides, avec une composante polyoléfine modifiée, consistant en une ou plusieurs polyoléfines, notamment polypropylène, dont l'une au moins a été modifiée pour améliorer la compatibilité de la composante polyoléfine à l'égard de la composante polyamide. Lesdits alliages présentent un compromis intéressant entre les différentes propriétés de chacune des composantes polymères.

On sait que les polyamides se caractérisent par une bonne tenue thermique, mais que leur stabilité dimensionnelle est affectée par une reprise en eau relativement importante, tandis que le polypropylène, qui n'absorbe pas d'eau, a une stabilité dimensionnelle non affectée par le degré d'humidité de l'air ambiant, mais présente une tenue thermique modeste et une stabilité dimensionnelle inférieure à celle du polyamide sec.

Un alliage polyamide/polypropylène présentera par contre une stabilité dimensionnelle comprise entre celle du polypropylène et celle du polyamide sec, une reprise en eau proche de celle du polypropylène et par conséquent une stabilité dimensionnelle indépendante du degré d'humidité de l'air ambiant et également une tenue thermique satisfaisante.

Les alliages polyamide/polyoléfine peuvent être utilisés, en particulier, dans le secteur de l'industrie automobile pour la réalisation de pièces d'aspect comme les enjoliveurs de roues et les ailes de carrosserie ou encore dans d'autres domaines et, notamment, pour la réalisation de mobilier de jardin.

Pour une utilisation à la réalisation de pièces d'aspect pour automobiles, un alliage polymère doit avoir entre autres une bonne résistance thermique aux températures de l'ordre de 180 °C, qui correspondent aux températures de cuisson des peintures utilisées pour les éléments de carrosserie automobile, de manière à ce que lesdites pièces en alliage polymère puissent être insérées dans une ligne de peinture au même titre que les pièces métalliques, et également une aptitude satisfaisante à la mise en peinture.

On sait produire des alliages polyamide/polypropylène ayant la stabilité thermique précitée pour la réalisation de pièces d'aspect pour automobile, mais par contre l'aptitude à la mise en peinture de telles pièces pose encore problème en raison d'une polarité insuffisante de la surface de la pièce en alliage qui se traduit par une adhérence médiocre entre le revêtement peinture et ladite surface. Une telle adhérence ne répond pas à un cahier des charges de l'industrie automobile et il est nécessaire d'avoir recours à un traitement de surface de ladite pièce en alliage, avant sa mise en peinture, pour améliorer son aptitude à recevoir la peinture.

Dans l'état de la technique relatif à la mise en peinture d'objets façonnés en polyoléfine, on a proposé d'améliorer l'aptitude à la mise en peinture desdits objets en lavant la surface de ces objets à l'aide d'un solvant particulier, puis en soumettant la surface lavée des objets à un traitement à l'aide d'un plasma (US-A-4465715 et GB-A-2172819). Le solvant particulier est un solvant organique chloré ou aromatique (par exemple benzène, toluène, trichloréthane, dichloréthylène) ayant un paramètre de solubilité égal ou comparable à celui de la polyoléfine (US-A-4465715) ou bien un solvant organique fluoré tel que difluoro-1,2 tétrachloréthane (GB-A-2172819). Le traitement plasma est réalisé au moyen d'un plasma microonde produit par un système de décharge électrique à courant microonde à couplage par cavité résonnante.

Dans les citations EP-A-0296002 et EP-A-0120307, on propose de modifier les surfaces d'objets en polyoléfine, pour améliorer l'adhérence de revêtements polymères (EP-A-0296002) ou de films de peinture (EP-A-0120307) sur ces surfaces, en soumettant lesdites surfaces à l'action d'un plasma différé ou plasma post-décharge obtenu en faisant appel à un système de décharge électrique à courant microonde à couplage par cavité résonnante. La citation EP-A-0296002 utilise un plasma différé d'azote contenant essentiellement des atomes d'azote et des molécules d'azote excitées et sensiblement dépourvu d'ions et d'électrons libres. La citation EP-A-0120307 utilise l'oxygène pour générer le plasma différé.

L'invention propose un procédé pour améliorer l'aptitude à la mise en peinture d'un objet façonné, dont au moins la partie extérieure est en un alliage polyamide/polyoléfine, ce procédé se caractérisant en ce que l'on met l'objet façonné en contact, dans une zone de traitement maintenue sous une pression allant de 17,2 Pa à 93,1 Pa, avec un flux gazeux réactif du type plasma froid produit dans ladite zone de traitement par action d'une décharge électrique sur un gaz en faisant appel à un système de décharge électrique à courant continu ou à un système de décharge électrique à courant alternatif du type à couplage capacitif entre deux électrodes et l'on soumet l'objet façonné, dans ladite zone de traitement simultanément à sa mise en contact avec le flux gazeux réactif ou dans une zone subséquente après ladite mise en contact, à l'action d'une source d'oxygène pour réaliser une oxydation de la surface de l'objet façonné.

Comme il est connu dans l'art (cf., par exemple, l'encyclopédie de KIRK-OTHMER intitulée ENCYCLOPEDIA OF CHEMICAL TECHNOLOGY, Third Edition, Supplement Volume, page 614), le terme "plasma froid" désigne un plasma gazeux hors équilibre thermodynamique pour lequel la température des électrons est très élevée par rapport à la température des autres espèces contenues dans le plasma, cette dernière température restant proche de la température ambiante.

Dans la mise en oeuvre du procédé selon l'invention, on réalise simultanément dans une même zone de traitement la production du flux gazeux réactif par action de la décharge électrique sur le gaz et la mise en contact de l'objet façonné à traiter avec le flux gazeux réactif et avec la source d'oxygène, ou bien encore on réalise simultanément, dans une même zone, la production du flux gazeux réactif et la mise en contact de l'objet façonné à traiter avec ledit flux gazeux réactif, puis on effectue dans une zone subséquente la mise en contact de l'objet façonné, traité par le flux gazeux réactif, avec la source d'oxygène.

Le gaz que l'on soumet à la décharge électrique pour produire le flux gazeux réactif peut être avantageusement choisi parmi les gaz rares, notamment argon, hélium et néon, l'azote, l'oxygène, les oxydes d'azote, l'ammoniac, le dioxyde de carbone, la vapeur d'eau, les composés oxygénés organiques volatils dans les conditions d'utilisation et les mélanges de tels gaz et/ou composés, notamment air, mélanges d'azote et d'oxygène autres que l'air et mélanges d'oxygène et d'un ou plusieurs gaz rares.

Pour la production du flux gazeux réactif utilisable dans le procédé selon l'invention, le système générateur de la décharge électrique dans le gaz est un système à courant continu, produisant une décharge électrique pouvant être de type couronne, ou un système de décharge électrique à courant alternatif du type à couplage capacitif entre deux électrodes.

La source d'oxygène que l'on met en contact avec l'objet façonné, simultanément ou subséquemment à la mise en contact dudit objet avec le flux gazeux réactif (plasma froid), peut être constituée du gaz soumis à la décharge électrique, lorsque ce gaz contient de l'oxygène libre ou/et un composé oxygéné organique volatil dans les conditions d'utilisation. La source d'oxygène peut consister également en un gaz renfermant de l'oxygène libre ou/et un composé oxygéné organique tel que précité, que l'on injecte dans la zone de mise en contact de l'objet façonné avec le flux gazeux réactif. La source d'oxygène peut être encore constituée de l'oxygène atmosphérique lors de la mise en contact de l'objet façonné avec l'atmosphère ambiante, après la mise en contact dudit objet avec le flux gazeux réactif.

Les températures de mise en oeuvre du procédé selon l'invention et en particulier les températures de mise en contact de l'objet façonné à traiter avec le flux gazeux réactif, sont le plus souvent égales à la température ambiante ou voisines de cette dernière, bien qu'il soit possible d'opérer à des températures plus élevées sous réserve toutefois de rester en dessous des températures conduisant à une déformation mécanique de l'objet façonné.

La durée du traitement de l'objet façonné par le flux gazeux réactif, c'est-à-dire la durée du maintien en contact dudit objet façonné avec ledit flux gazeux réactif, peut aller, par exemple, de 0,1s à 200s environ.

L'alliage polyamide/polyoléfine, qui forme au moins la partie externe de l'objet façonné à traiter selon l'invention et qui le plus souvent constitue la totalité de la matière dudit objet, peut être choisi parmi les alliages polyamide/polyoléfine, qui sont formés, comme indiqué précédemment, d'un mélange d'une composante polyamide, consistant en un ou plusieurs polyamides, avec une composante polyoléfine, consistant en une ou plusieurs polyoléfines, et un agent compatibilisant susceptible de compatibiliser les deux composantes polymères en présence, ou encore parmi les alliages polyamide/polyoléfine qui résultent du mélange d'une composante polyamide et d'une composante polyoléfine modifiée, consistant en une ou plusieurs polyoléfines dont l'une au moins a été modifiée pour améliorer la compatibilité de la composante polyoléfine à l'égard de la composante polyamide.

Les polyamides à partir desquels on forme la composante polyamide de l'alliage peuvent être en particulier des polyamides ou copolyamides aliphatiques tels que polyamide 6, polyamide 11, polyamide 12, copolyamide 6-10, copolyamide 6-9, copolyamide 6-6, des polyesteramides, des polyamides semi-aromatiques, des polyétheresteramides séquencés ou statistiques et notamment les polyétheresteramides séquencés décrits dans les brevets US-A-4332920 et US-A-4331786.

Les polyoléfines à partir desquelles on forme la composante polyoléfine de l'alliage sont avantageusement des homopolymères ou des copolymères statistiques ou séquencés d'alpha-oléfines en $C_2$ à $C_{12}$ et de préférence en $C_2$ à $C_8$, notamment polypropylène, polyéthylène et copolymères éthylène/propylène.

Lorsque les composantes polyamide et polyoléfine de l'alliage sont compatibilisées en faisant appel à un agent compatibilisant, un tel agent peut être choisi parmi les divers produits proposés dans ce but et avantageusement parmi les agents compatibilisants qui sont décrits dans les citations FR-A-2629090 et FR-A-2628115.

Lorsque les composantes polyamide et polyoléfine de l'alliage sont compatibilisées par modification d'au moins l'une des polyoléfines présentes dans la composante polyoléfine, la polyoléfine modifiée peut être notamment un polypropylène, un polyéthylène ou un copolymère éthylène/propylène, sur lequel on a greffé des groupements fonctionnels apportant une affinité pour les polyamides, et en particulier un polypropylène maléisé.

Des exemples non limitatifs d'alliages polyamide/polyoléfine servant à produire les objets façonnés, que l'on traite selon l'invention, sont notamment les alliages associant une composante polyamide, comportant au moins un polyamide consistant en copolyamide 6-6, polyamide 6, polyamide 11 ou polyamide 12, à une composante polyoléfine, comportant au moins une polyoléfine consistant en polypropylène, polyéthylène ou copolymère éthylène/propylène et à un agent compatibilisant choisi parmi ceux décrits dans les citations FR-A-2629090 et FR-A-2628115. Comme exemples d'alliages polyamide/polyoléfine faisant appel à une composante polyoléfine modifiée, on peut citer les alliages associant un polypropylène maléisé à au moins un polyamide consistant en polyamide 6, polyamide 11, polyamide 12 ou copolyamide 6-6.

Les alliages polyamide/polyoléfine associant une composante polyamide à une composante polyoléfine et à un agent compatibilisant renferment avantageusement des teneurs en chacun de ces trois constituants choisies pour que les pourcentages pondéraux x de la composante polyamide, y de la composante polyoléfine et z de l'agent compatibilisant, exprimés par rapport au total des trois constituants, aient des valeurs telles que $40 \leq x \leq 80$, $20 \leq y \leq 59,9$ et $0,1 \leq z \leq 30$ avec $x + y + z = 100$, des valeurs préférées pour x, y et z étant telles que $50 \leq x \leq 70$, $25 \leq y \leq 55$ et $5 \leq z \leq 15$ avec $x + y + z = 100$.

La composition pondérale indiquée ci-dessus est en particulier celle des alliages polyamide/polyoléfine pour lesquels la composante polyamide est formée d'au moins un polyamide consistant en polyamide 6, polyamide 11, polyamide 12, ou copolyamide 6-6, la composante polyoléfine est formée d'au moins une polyoléfine consistant en polypropylène, polyéthylène ou copolymère éthylène/propylène et l'agent compatibilisant est choisi parmi ceux décrits dans les citations FR-A-2629090 et FR-A-2628115 et notamment dans les exemples de ces citations.

Pour les alliages polyamide/polyoléfine résultant de l'association d'une composante polyamide, par exemple consistant en au moins un polyamide choisi parmi polyamide 6, polyamide 11, polyamide 12 et copolyamide 6-6, et d'une composante polyoléfine modifiée, par exemple polypropylène maléisé, les pourcentages pondéraux u de la composante polyamide et v de la composante polyoléfine modifiée, par rapport au total de ces deux composantes, ont avantageusement des valeurs telles que $40 \leq u \leq 80$ et $20 \leq v \leq 60$ avec $u + v = 100$, des valeurs préférées pour u et v étant telles que $50 \leq u \leq 70$ et $30 \leq v \leq 50$ avec $u + v = 100$.

En plus de leurs constituants principaux, à savoir composante polyamide, composante polyoléfine ou composante polyoléfine modifiée et, s'il est présnt, agent compatibilisant, les alliages polyamide/polyoléfine utilisables pour former les objets façonnés, que l'on traite par le procéddé selon l'invention, peuvent encore renfermer des additifs tels que des élastomères comme les EPR maléisés, des charges inorganiques comme $CaCO_3$, talc et silice, des agents de renforcement fibreux comme les libres de verre, des antioxydants, des stabilisants thermiques, des stabilisants au rayonnement UV.

Le procédé selon l'invention est applicable au traitement des divers objets, qui peuvent être façonnés à partir d'alliages polyamide/polyoléfine et dont on veut améliorer l'aptitude à la mise en peinture. Comme indiqué précédemment, ces objets incluent, notamment, des pièces d'aspect pour automobiles telles que des enjoliveurs de roues et des ailes de carrosserie, ou encore des éléments de mobilier de jardin.

L'invention est illustrée par les exemples suivants donnés à titre non limitatif.

EXEMPLE 1 :

A partir de quatre alliages polyamide/polyoléfine de compositions différentes, on réalisait des plaques ayant une épaisseur de 3mm en opérant par moulage par injection et on prélevait sur ces plaques des échantillons en forme de disques ayant un diamètre égal à 6cm, puis soumettait lesdits échantillons à un traitement selon l'invention. Les alliages servant à la fabrication des plaques étaient obtenus par malaxage des constituants dans une extrudeuse opérant à une température suffisante pour que le mélange soit à l'état fondu et avaient la composition suivante exprimée en poids :

. Alliage A : Cet alliage était constitué de 51,3% d'un copolyamide 6-6 de point de fusion égal à 265 °C, de 29,7% d'un polypropylène homopolymère de point de fusion égal à 163 °C et d'indice de fusion (melt index) égal à 0,4, de 9% d'un agent compatibilisant consistant en le copolymère greffé obtenu dans l'exemple 1C de la citation FR-A-2629090 et 10% d'un additif consistant en un élastomère EPR maléisé.

. Alliage B : Cet alliage renfermait 59,8% d'un copolyamide 6-6 de point de fusion égal à 265°C, 23% d'un polypropylène homopolymère de point de fusion égal à 163°C et d'indice de fusion compris entre 4 et 6, 9,2% d'un agent compatibilisant consistant en le copolymère greffé obtenu dans l'exemple 3C de la citation FR-A-2629090 et 8% d'un additif consistant en un élastomèree EPR maléisé.

. Alliage C : Cet alliage était formé de 42,7% d'un polyamide 6 ayant un point de fusion égal à 220°C, de 24,8% d'un polypropylène homopolymère ayant un point de fusion égal à 163°C et un indice de fusion compris entre 4 et 6, de 7,5% d'un agent compatibilisant consistant en le copolymère greffé obtenu dans l'exemple 3C de la citation FR-A-2629090 et de 25% d'une charge consistant en $CaCO_3$.

. Alliage D : Cet alliage renfermait 57% d'un polyamide 6 ayant un point de fusion de 220°C, 33% d'un polypropylène homopolymère ayant un point de fusion de 163°C et un indice de fusion compris entre 4 et 6 et 10% d'un agent compatibilisant consistant en le copolymère greffé obtenu dans l'exemple 1C de la citation FR-A-2629090.

Le traitement des échantillons était réalisé dans une enceinte de type capacitif, dans laquelle étaient montées deux électrodes horizontales en forme de plaques distantes de 5cm et connectées chacune à l'une des bornes d'un générateur de courant alternatif extérieur à l'enceinte, ledit générateur fournissant un courant électrique ayant une fréquence de 20kHz sous une puissance de 20 ou 60 W selon les cas. L'enceinte de traitement était pourvue, en outre, d'un conduit d'amenée d'un gaz précurseur du flux gazeux réactif débouchant à proximité de l'espace entre les électrodes et était également connectée à l'aspiration d'une pompe primaire permettant de maintenir la pression désirée à l'intérieur de l'enceinte.

L'échantillon à traiter était placé entre les électrodes de l'enceinte de manière à reposer sur l'électrode inférieure et de ce fait ledit échantillon se trouvait directement dans la zone d'action du flux gazeux réactif résultant de l'action de la décharge électrique, prenant naissance entre les électrodes lorsque ces dernières sont mises sous tension, sur le gaz injecté entre lesdites électrodes, ledit gaz étant de l'argon dans cet exemple.

Après une durée de traitement égale à 30 secondes, l'échantillon traité par le flux gazeux réactif (plasma froid) était retiré de l'enceinte et laissé au contact de l'atmosphère ambiante pendant une durée de 12 heures.

Au bout de cette durée, on appliquait, par pistoletage, directement sur la surface traitée de l'échantillon une couche d'une laque polyuréthanne bicomposante ayant 35 à 40 $\mu$m d'épaisseur et soumettait ladite couche à un séchage à 80°C pendant 20 minutes.

Chaque échantillon revêtu du film de laque séché était soumis à un essai d'adhérence après quadrillage réalisé selon la norme NF T 30-038 intitulée "Essai de quadrillage des feuils de peintures et vernis", pour déterminer l'adhérence du film de laque à la surface de l'échantillon et une note allant de 0 à 5 était attribuée, comme défini dans la norme, pour caractériser cette adhérence, la note O correspondant à une adhérence satisfaisante et étant requise par le cahier des charges pour les applications "pièces d'aspect peintes" dans l'industrie automobile.

Les conditions opératoires spécifiques au traitement des échantillons et les résultats de l'essai d'adhérence après quadrillage sont consignés dans le tableau I.

TABLEAU I

| Argon comme gaz précurseur du flux gazeux réactif | | | |
|---|---|---|---|
| Alliage | Puissance délivrée par le générateur (Watts) | Pression dans l'enceinte(Pa) | Note à l'essai d'adhérence après quadrillage |
| A | 20<br>20<br>20 | 17,3<br>30,6<br>46,6 | 0<br>0<br>0 |
| B | 20<br>20<br>20<br>60 | 30,6<br>46,6<br>46,6<br>46,6 | 0<br>0<br>0<br>0 |
| C | 20<br>20<br>20 | 17,3<br>30,6<br>46,6 | 0<br>0<br>0 |
| D | 20<br>20<br>20 | 17,3<br>30,6<br>46,6 | 0<br>0<br>0 |

Comme le montrent les notes représentatives des résultats des essais d'adhérence après quadrillage, le film de laque adhère d'une manière satisfaisante (note 0) à la surface des divers échantillons d'alliages, qui ont été traités par le procédé selon l'invention. Ladite adhérence répond aux exigences de l'industrie automobile en matière de pièces d'aspect peintes.

Par contre, pour des échantillons témoins de même géométrie obtenus à partir des divers alliages A, B, C ou D mais non traités parle procédé selon l'invention, la note 4 ou 5 était attribuée dans chaque cas comme résultat de l'essai d'adhérence après quadrillage, ce qui indique une adhérence médiocre à très mauvaise du film de laque aux échantillons témoins.

EXEMPLE 2 :

Des échantillons produits comme indiqué dans l'exemple 1 à partir des alliages A à D étaient soumis à un traitement selon l'invention comme indiqué dans ledit exemple, en changeant toutefois la nature du gaz soumis à la décharge électrique pour produire le flux gazeux réactif et en faisant varier la pression dudit gaz d'un traitement à l'autre. La durée de maintien de chaque échantillon au contact du flux gazeux réactif était égale à 30 secondes. Les échantillons traités par le flux gazeux réactif étaient retires de l'enceinte et soumis à l'essai d'adhérence après quadrillage comme explicité dans l'exemple 1.

Les conditions opératoires spécifiques au traitement des échantillons et les résultats de l'essai d'adhérence après quadrillage sont rassemblés dans le tableau II

TABLEAU II

| Gaz précurseur du flux gazeux réactif | Alliage | Puissance délivrée par le générateur (Watts) | Pression dans l'enceinte (Pa) | Note à l'essai d'adhérence après quadrillage |
|---|---|---|---|---|
| Oxygène | B | 20 | 17,3 | 0 |
| | | 20 | 30,6 | 0 |
| | | 20 | 46,6 | 0 |
| | | 20 | 93,1 | 0 |
| | C | 20 | 17,3 | 0 |
| | | 20 | 30,6 | 0 |
| | | 20 | 46,6 | 0 |
| Azote | C | 20 | 17,3 | 0 |
| | | 20 | 30,6 | 0 |
| | | 20 | 46,6 | 0 |
| Air | B | 20 | 17,3 | 0 |
| | | 20 | 30,6 | 0 |
| | | 20 | 46,6 | 0 |
| | | 20 | 93,1 | 0 |
| | C | 20 | 17,3 | 0 |
| | | 20 | 30,6 | 0 |
| | | 20 | 46,6 | 0 |

Comme il ressort des notes attribuées lors de l'essai d'adhérence après quadrillage réalisé sur les échantillons traités comme indiqué dans l'exemple 2, l'utilisation d'oxygène, d'azote ou d'air comme gaz précurseurs du flux gazeux réactif conduit à des résultats comparables à ceux obtenus dans l'exemple 1 avec l'argon comme gaz précurseur, c'est-à-dire à une adhérence satisfaisante du film de laque aux échantillons traités par le flux gazeux réactif.

**Revendications**

1. Procédé pour améliorer l'aptitude à la mise en peinture d'un objet façonné, dont au moins la partie extérieure est en un alliage polyamide/polyoléfine, caractérise en ce que l'on met l'objet façonné en contact, dans une zone de traitement maintenue sous une pression allant de 17,3 Pa à 93,1 Pa, avec un flux gazeux réactif du type plasma froid produit dans ladite zone de traitement par action d'une décharge électrique sur un gaz en faisant appel à un système de décharge électrique à courant continu ou à un système de décharge électrique à courant alternatif du type à couplage capacitif entre deux électrodes et l'on soumet l'objet façonné, dans ladite zone de traitement simultanément à sa mise en contact avec le flux gazeux réactif ou dans une zone subséquente après ladite mise en contact, à l'action d'une source d'oxygène pour réaliser une oxydation de la surface de l'objet façonné.

2. Procédé selon la revendication 1, caractérisé en ce que le gaz, que l'on soumet à l'action de la décharge électrique pour produire le flux gazeux réactif, est choisi parmi les gaz rares, notamment argon, hélium et néon, l'azote, l'oxygène, les oxydes d'azote, l'ammoniac, le dioxyde de carbone, la vapeur d'eau, les composés oxygénés organiques volatils dans les conditions d'utilisation et les mélanges de tels gaz et/ou composés oxygénés, notamment air, mélanges d'azote et d'oxygène autres que l'air et mélanges d'oxygène et d'un ou plusieurs gaz rares.

3. Procédé selon la revendication 1, caractérisé en ce que l'objet façonné est mis en contact simultanément, dans la zone de traitement, avec le flux gazeux réactif et la source d'oxygène et en ce que le gaz soumis à la décharge électrique, pour produire le flux gazeux réactif, renferme de l'oxygène et constitue également ladite source d'oxygène.

4. Procédé selon la revendication 1, caractérisé en ce que l'objet façonné est mis en contact, dans la zone de traitement, avec le flux gazeux réactif et en ce que l'objet façonné traité par le flux gazeux réactif est soumis ensuite à l'action de l'atmosphère ambiante, cette dernière jouant le rôle de source d'oxygène.

5. Procédé selon l'une des revendications 1 à 4, caractérisé en ce que la durée du maintien en contact de l'objet façonné avec le flux gazeux réactif va de 0,1 s à 200 s.

6. Procédé selon l'une des revendications 1 à 5, caractérisé en ce que l'objet façonné à traiter consiste en totalité en l'alliage polyamide/polyoléfine.

7. Procédé selon l'une des revendications 1 à 6, caractérisé en ce que l'alliage polyamide/polyoléfine, qui forme au moins la partie externe de l'objet façonné à traiter, est constitué d'un mélange d'une composante polyamide consistant en un ou plusieurs polyamides, avec une composante polyoléfine, consistant en une ou plusieurs polyoléfines, et un agent compatibilisant susceptible de compatibiliser les deux composantes polymères en présence.

8. Procédé selon l'une des revendications 1 à 6, caractérisé en ce que l'alliage polyamide/polyoléfine, qui forme au moins la partie externe de l'objet façonné à traiter, est constitué d'un mélange d'une composante polyamide, consistant en un ou plusieurs polyamides, avec une composante polyoléfine modifiée, consistant en une ou plusieurs polyoléfines dont l'une au moins a été modifiée pour améliorer la compatibilité de la composante polyoléfine à l'égard de la composante polyamide.

9. Procédé selon la revendication 7 ou 8, caractérisé en ce que les polyamides, à partir desquels on forme la composante polyamide de l'alliage, sont choisis parmi les polyamides ou copolyamides aliphatiques tels que polyamide 6, polyamide 11, polyamide 12, copolyamide 6-10, copolyamide 6-9, copolyamide 6-6, les polyesteramides, les polyamides semi-aromatiques et les polyétheresteramides statistiques ou séquencés.

10. Procédé selon la revendication 7 ou 9, caractérisé en ce que les polyoléfines à partir desquelles on forme la composante polyoléfine de l'alliage sont des homopolymères ou des copolymères statistiques ou séquencés d'alpha-oléfines en $C_2$ à $C_{12}$ et de préférence en $C_2$ à $C_8$, notamment polypropylène, polyéthylène et copolymères éthylène/propylène.

11. Procédé selon la revendication 8, caractérisé en ce que la polyoléfine modifiée est un polypropylène, un polyéthylène ou un copolymère éthylène/propylène sur lequel on a greffé des groupements fonctionnels apportant une affinité pour les polyamides, ladite polyoléfine modifiée étant en particulier un polypropylène maléisé.

12. Procédé selon la revendication 7 ou 9 ou 10 caractérisé en ce que, dans l'alliage polyamide/polyoléfine, les pourcentages pondéraux x de la composante polyamide, y de la composante polyoléfine et z de l'agent compatibilisant, exprimés par rapport au total des trois constituants, ont des valeurs telles que $40 \leq x \leq 80$ $20 \leq y \leq 59,9$ et $0,1 \leq z \leq 30$ avec $x + y + z = 100$, lesdites valeurs étant de préférence telles que $50 \leq x \leq 70$, $25 \leq y \leq 55$ et $5 \leq z \leq 15$ avec $x + y + z = 100$.

13. Procédé selon la revendication 8 ou 11, caractérisé en ce que, dans l'alliage polyamide/polyoléfine, les pourcentages pondéraux u de la composante polyamide et v de la composante polyoléfine modifiée, par rapport au total de ces deux composantes, ont des valeurs telles que $40 \leq u \leq 80$ et $20 \leq v \leq 60$ avec $u + v = 100$, lesdites valeurs étant de préférence telles que $50 \leq u \leq 70$ et $30 \leq v \leq 50$ avec $u + v = 100$.

14. Procédé selon l'une des revendications 7 à 13, caractérisé en ce qu'en plus de ses constituants principaux, à savoir composante polyamide, composante polyoléfine ou composante polyoléfine modifiée et, s'il est présent, agent compatibilisant, l'alliage polyamide/polyoléfine renferme encore un ou plusieurs produits choisis parmi les élastomères du type des EPR maléisés, les charges inorganiques, les agents de renforcement fibreux, les antioxydants, les stabilisants thermiques, les stabilisants au rayonnement UV.

15. Procédé selon l'une des revendications 1 à 14, caractérisé en ce que l'objet façonné à traiter est une pièce d'aspect pour automobile, notamment un enjoliveur de roue ou une aile de carrosserie, ou encore un élément de mobilier de jardin.

**16.** Objet façonné, dont au moins la partie extérieure est en un alliage polyamide/polyoléfine, traité par le procédé selon l'une des revendications 1 à 15, puis revêtu d'une peinture.

## Claims

**1.** Process for improving the ability to be painted of a shaped article, at least the outer part of which comprises a polyamide/polyolefin alloy, characterised in that the shaped article is brought into contact, in a treatment zone maintained under a pressure of from 17.3 Pa to 93.1 Pa, with a reactive gas stream of the cold plasma type produced in the said treatment zone by the action of an electric discharge on a gas, using a direct current electric discharge system or an alternating current electric discharge system of the type for capacitive coupling between two electrodes, and the shaped article is subjected, in the said treatment zone, at the same time as it is brought into contact with the reactive gas stream or in a downstream zone after being brought into contact with the said stream, to the action of a source of oxygen in order to effect oxidation of the surface of the shaped article.

**2.** Process according to Claim 1, characterised in that the gas, which is subjected to the action of the electric discharge in order to produce the reactive gas stream, is selected from the rare gases, especially argon, helium and neon, nitrogen, oxygen, nitrogen oxides, ammonia, carbon dioxide, water vapour, organic oxygen-containing compounds that are volatile under the conditions of use and mixtures of such gases and/or oxygen-containing compounds, especially air, mixtures of nitrogen and oxygen other than air, and mixtures of oxygen and one or more rare gases.

**3.** Process according to Claim 1, characterised in that the shaped article is, in the treatment zone, brought into contact with the reactive gas stream and the source of oxygen simultaneously, and in that the gas subjected to the electric discharge, in order to produce the reactive gas stream, contains oxygen and also constitutes the said source of oxygen.

**4.** Process according to Claim 1, characterised in that the shaped article is brought into contact, in the treatment zone, with the reactive gas stream and in that the shaped article treated by the reactive gas stream is then subjected to the action of the ambient atmosphere, the latter playing the part of the source of oxygen.

**5.** Process according to any one of Claims 1 to 4, characterised in that the period during which the shaped article remains in contact with the reactive gas stream is from 0.1 second to 200 seconds.

**6.** Process according to any one of Claims 1 to 5, characterised in that the shaped article to be treated consists entirely of the polyamide/polyolefin alloy.

**7.** Process according to any one of Claims 1 to 6, characterised in that the polyamide/polyolefin alloy, which forms at least the outer part of the shaped article to be treated, is constituted by a mixture of a polyamide component comprising one or more polyamides, and a polyolefin component comprising one or more polyolefins, and a compatibilising agent capable of compatibilising the two polymer components which have been brought together.

**8.** Process according to any one of Claims 1 to 6, characterised in that the polyamide/polyolefin alloy, which forms at least the outer part of the shaped article to be treated, is constituted by a mixture of a polyamide component comprising one or more polyamides, and a modified polyolefin component comprising one or more polyolefins, at least one of which has been modified in order to improve the compatibility of the polyolefin component with the polyamide component.

**9.** Process according to Claim 7 or 8, characterised in that the polyamides from which the polyamide component of the alloy is formed are selected from aliphatic polyamides or copolyamides, such as polyamide 6, polyamide 11, polyamide 12, copolyamide 6-10, copolyamide 6-9, copolyamide 6-6, polyester amides, semi-aromatic polyamides and random or block polyether ester amides.

**10.** Process according to Claim 7 or 9, characterised in that the polyolefins from which the polyolefin component of the alloy is formed are homopolymers or random or block copolymers of alpha-olefins containing from 2 to 12 carbon atoms and preferably from 2 to 8 carbon atoms, especially polypropylene, polyethylene and ethylene/propylene copolymers.

11. Process according to Claim 8, characterised in that the modified polyolefin is a polypropylene, a polyethylene or an ethylene/propylene copolymer on which have been grafted functional groupings introducing an affinity for polyamides, the said modified polyolefin being especially a maleised polypropylene.

12. Process according to Claim 7 or 9 or 10, characterised in that, in the polyamide/polyolefin alloy, the percentages by weight x of the polyamide component, y of the polyolefin component and z of the compatibilising agent, expressed in relation to the total of the three constituents, have values such that $40 \leq x \leq 80$, $20 \leq y \leq 59.9$ and $0.1 \leq z \leq 30$ with $x + y + z = 100$, the said values being preferably such that $50 \leq x \leq 70$, $25 \leq y \leq 55$ and $5 \leq z \leq 15$ with $x + y + z = 100$.

13. Process according to Claim 8 or 11, characterised in that, in the polyamide/polyolefin alloy, the percentages by weight u of the polyamide component and v of the modified polyolefin component, in relation to the total of those two components, have values such that $40 \leq u \leq 80$ and $20 \leq v \leq 60$ with $u + v = 100$, the said values being preferably such that $50 \leq u \leq 70$ and $30 \leq v \leq 50$ with $u + v = 100$.

14. Process according to any one of Claims 7 to 13, characterised in that, in addition to its principal constituents, that is to say, the polyamide component, the polyolefin component or the modified polyolefin component and, if present, the compatibilising agent, the polyamide/polyolefin alloy also contains one or more products selected from the elastomers of the maleised EPR type, inorganic charges, fibre reinforcing agents, anti-oxidants, thermal stabilisers and UV radiation stabilisers.

15. Process according to any one of Claims 1 to 14, characterised in that the shaped article to be treated is a visible component for a car, especially an ornamental hub cap or a wing, or an element of garden furniture.

16. Shaped article at least the outer part of which comprises a polyamide/polyolefin alloy, treated by the process according to any one of Claims 1 to 15, then coated with a paint.

**Patentansprüche**

1. Verfahren zur Verbesserung der Lackierbarkeit eines Formteils, bei dem Wenigstens der äußere Teil aus einer Polyamid-Polyolefin-Legierung besteht, dadurch **gekennzeichnet,** daß man das Formteil in einer unter einem Druck von 17,3 bis 93,1 Pa gehaltenen Behandlungszone mit einem reaktionsfähigen Gasstrom vom Typ eines Niedertemperaturplasmas, das man in der Behandlungszone durch Einwirkung einer elektrischen Entladung auf ein Gas unter Verwendung eines mit Gleichstrom betriebenen elektrischen Entladungssystems oder eines mit Wechselstrom betriebenen elektrischen Entladungssystems mit kapazitiver Kopplung zwischen den beiden Elektroden erzeugt, in Berührung bringt und das Formteil in der Behandlungszone gleichzeitig mit der Kontaktierung mit dem reaktionsfähigen Gasstrom oder in einer an die Kontaktierung anschließenden Zone der Einwirkung einer Sauerstoffquelle aussetzt, um die Oberfläche des Formteils zu oxydieren.

2. Verfahren nach Anspruch 1, dadurch **gekennzeichnet,** daß das Gas, auf das man die elektrische Entladung einwirken läßt, um den reaktionsfähigen Gasstrom zu erzeugen, ausgewählt wird unter Edelgasen, insbesondere Argon, Helium und Neon, Stickstoff, Sauerstoff, Stickoxiden, Ammoniak, Kohlendioxid, Wasserdampf, unter den Betriebsbedingungen flüchtigen organischen Sauerstoffverbindungen und Gemischen dieser Gase und/oder Sauerstoffverbindungen, insbesondere Luft, anderen Gemischen aus Stickstoff und Sauerstoff als Luft und Gemischen aus Sauerstoff und einem oder mehreren Edelgasen.

3. Verfahren nach Anspruch 1, dadurch **gekennzeichnet,** daß das Formteil in der Behandlungszone gleichzeitig mit dem reaktionsfähigen Gasstrom und der Sauerstoffquelle in Berührung gebracht wird und das der elektrischen Entladung ausgesetzte Gas für die Erzeugung des reaktionsfähigen Gasstroms Sauerstoff enthält und gleichzeitig die Sauerstoffquelle bildet.

**4.** Verfahren nach Anspruch 1, dadurch **gekennzeichnet,** daß das Formteil in der Behandlungszone mit dem reaktionsfähigen Gasstrom in Berührung gebracht wird und das mit dem reaktionsfähigen Gasstrom behandelte Formteil der Einwirkung der Umgebungsluft Atmosphäre, welche die Rolle der Sauerstoffquelle spielt, ausgesetzt wird.

**5.** Verfahren nach einem der Ansprüche 1 bis 4, dadurch **gekennzeichnet,** daß die Dauer der Kontaktierung des Formteils mit dem reaktionsfähigen Gasstrom 0,1 bis 200 s beträgt.

**6.** Verfahren nach einem der Ansprüche 1 bis 5, dadurch **gekennzeichnet,** daß das zu behandelnde Formteil zur Gänze aus der Polyamid-Polyolefin-Legierung besteht.

**7.** Verfahren nach einem der Ansprüche 1 bis 6, dadurch **gekennzeichnet,** daß die Polyamid-Polyolefin-Legierung, die wenigstens den äußeren Teil des zu behandelnden Formteils bildet, zusammengesetzt ist aus einem Gemisch einer Polyamidkomponente, bestehend aus einem oder mehreren Polyamiden, mit einer Polyolefinkomponente, bestehend aus einem oder mehreren Polyolefinen, und einem Verträglichkeitsmittel, das die beiden vorliegenden Polymerkomponenten miteinander verträglich zu machen vermag.

**8.** Verfahren nach einem der Ansprüche 1 bis 6, dadurch **gekennzeichnet,** daß die Polyamid-Polyolefin-Legierung, die wenigstens den äußeren Teil des zu behandelnden Formteils bildet, zusammengesetzt ist aus einem Gemisch einer Polyamidkomponente, bestehend aus einem oder mehreren Polyamiden, mit einer modifizierten Polyolefinkomponente, bestehend aus einem oder mehreren Polyolefinen, von denen wenigstens eines zur Verbesserung der Verträglichkeit der Polyolefinkomponente mit der Polyamidkomponente modifiziert wurde.

**9.** Verfahren nach Anspruch 7 oder 8, dadurch **gekennzeichnet,** daß die Polyamide, aus denen man die Polyamidkomponente bildet, ausgewählt werden unter aliphatischen Polyamiden oder Copolyamiden wie Polyamid 6, Polyamid 11, Polyamid 12, Copolyamid 6-10, Copolyamid 6-9, Copolyamid 6-6, Polyesteramiden, halbaromatischen Polyamiden und Random- oder Block-Polyetheresteramiden.

**10.** Verfahren nach Anspruch 7 oder 9, dadurch **gekennzeichnet,** daß die Polyolefine, aus denen man die Polyolefinkomponente der Legierung bildet, Homopolymere oder Random- oder Blockcopolymere von $C_{2-12}$-, vorzugsweise $C_{2-8}$-$\alpha$-Olefinen und insbesondere Polypropylen, Polyethylen und Ethylen-Propylen-Copolymere, sind.

**11.** Verfahren nach Anspruch 8, dadurch **gekennzeichnet,** daß das modifizierte Polyolefin ein Polypropylen, Polyethylen oder ein Ethylen-Propylen-Copolymer ist, auf dem man funktionelle Affinität gegenüber den Polyamiden verleihende Gruppen aufgepfropft hat, wobei das modifizierte Polyolefin insbesondere ein maleinisiertes Polypropylen ist.

**12.** Verfahren nach Anspruch 7, 9 oder 10, dadurch **gekennzeichnet,** daß in der Polyamid-Polyolefin-Legierung die Gewichtsprozente x der Polyamidkomponente, y der Polyolefinkomponente und z des Verträglichkeitsmittels, bezogen auf das Gesamtgewicht der drei Komponenten, die Werte $40 \leq x \leq 80$, $20 \leq y \leq 59{,}9$ und $0{,}1 \leq z \leq 30$ bei $x + y + z = 100$ besitzen, vorzugsweise jedoch $50 \leq x \leq 70$, $25 \leq y \leq 55$ und $5 \leq z \leq 15$ bei $x + y + z = 100$.

**13.** Verfahren nach Anspruch 8 oder 11, dadurch **gekennzeichnet,** daß in der Polyamid-Polyolefin-Legierung die Gewichtsprozente u der Polyamidkomponente und v der modifizierten Polyolefinkomponente, bezogen auf das Gesamtgewicht der beiden Komponenten, die Werte $40 \leq u \leq 80$ und $20 \leq v \leq 60$ bei $u + v = 100$ besitzen, vorzugsweise jedoch $50 \leq u \leq 70$ und $30 \leq v \leq 50$ bei $u + v = 100$.

**14.** Verfahren nach einem der Ansprüche 7 bis 13, dadurch **gekennzeichnet,** daß die Polyamid-Polyolefin-Legierung neben ihren Hauptkomponenten, d.h. neben der Polyamidkomponente, Polyolefinkomponente oder modifizierten Polyolefinkomponente und, falls vorhanden, auch neben dem Verträglichkeitsmittel noch einen oder mehrere Stoffe, ausgewählt unter Elastomeren vom Typ maleinisierter EPR, anorganische Füllstoffen, Faserverstärkungsmittel, Antioxidantien, Wärmestabilisatoren und UV-Strahlungsstabilisatoren, enthält.

**15.** Verfahren nach einem der Ansprüche 1 bis 14, dadurch **gekennzeichnet,** daß das zu behandelnde Formteil ein Zierteil für Autos, insbesondere eine Zierkappe, ein Kotflügel oder auch ein Teil von Gartenmöbeln ist.

**16.** Formteil, bei dem wenigstens der äußere Teil aus einer Polyamid-Polyolefin-Legierung besteht, das nach dem Verfahren nach einem der Ansprüche 1 bis 15 behandelt und dann lackiert wurde.